# DEMANDE DE BREVET EUROPEEN

(11) **EP 1 291 752 A1**
(43) Date de publication de la demande: **12.03.2003**
(21) Numéro de dépôt: 02292105.0
(22) Date de dépôt: 27.08.2002
(51) Int. Cl.: G06F 3/023

(54) **Dispositif de transmission de signaux de commande de claviers à une unité centrale d'ordinateur**

(30) Priorité: 06.09.2001 FR 0111554
(71) Demandeur: FRANCE TELECOM, 75015 Paris (FR)
(72) Inventeur: Heleu, Robert, 31700 Blagnac (FR)
(74) Mandataire: Habasque, Etienne Joel Jean-François

(57) **Abrégé**

L'invention concerne un dispositif de transmission d'une pluralité de claviers (2) de commande d'un ordinateur à une unité centrale (1) de l'ordinateur de signaux électriques de commande à au moins un accès (21, 34) d'entrée de l'unité centrale (1). Selon l'invention, le dispositif comporte :
- pour chaque clavier (2), au moins une entrée (69a) de signaux de clavier, - au moins une sortie (20, 33) de signaux de commande,
- des moyens (85) de commutation de la sortie (20, 33) de signaux de commande entre la pluralité d'entrées (69a), et
- des moyens (70) de commande des moyens (85) de commutation.

## Description

L'invention concerne un dispositif de transmission d'une pluralité de claviers de commande d'un ordinateur à une unité centrale de l'ordinateur de signaux électriques de commande à au moins un accès d'entrée de l'unité centrale.

Un tel dispositif doit permettre de commander l'unité centrale à partir de plusieurs claviers.

Les ordinateurs connus comportent une unité centrale reliée par un fil à un clavier permettant d'envoyer des signaux de commande à l'unité centrale.

Une telle architecture est figée et ne permet pas de faire intervenir plusieurs claviers physiquement distincts.

Ainsi, par exemple, pour que plusieurs utilisateurs puissent intervenir sur un fichier d'un ordinateur, il faut faire intervenir les utilisateurs tour à tour par l'intermédiaire de ce qu'il est convenu d'appeler un fichier partagé pouvant être lu par plusieurs ordinateurs connectés en réseau mais ne pouvant être modifié que par un seul ordinateur à la fois.

L'invention vise à obtenir un dispositif tel que mentionné ci-dessus, qui permette de commander l'unité centrale à partir de claviers distincts et qui étende les possibilités connues.

A cet effet, l'invention a pour objet un dispositif de transmission d'une pluralité de claviers de commande d'un ordinateur à une unité centrale de l'ordinateur de signaux électriques de commande à au moins un accès d'entrée de l'unité centrale, caractérisé en ce qu'il comporte :
- pour chaque clavier, au moins une entrée de signaux de clavier à laquelle sont appliqués des signaux électriques générés à partir du clavier,
- au moins une sortie de signaux de commande destinée à être reliée à l'accès d'entrée de l'unité centrale,
- des moyens de commutation de la sortie de signaux de commande entre la pluralité d'entrées de signaux de claviers, et
- des moyens de commande des moyens de commutation.

Dans un mode de réalisation de l'invention, permettant de commuter automatiquement sur le clavier utilisé, les moyens de commande comprennent, pour chaque entrée de signaux de clavier, au moins un détecteur de l'utilisation du clavier, apte à produire sur sa sortie, lorsque des signaux de clavier sont présents sur l'entrée de signaux de clavier, un signal d'utilisation de clavier déclenchant la commutation des moyens de commutation sur cette entrée de signaux de clavier.

Dans un mode de réalisation de l'invention, permettant de commuter entre un nombre quelconque de claviers et de fabriquer le dispositif de manière modulaire, les moyens de commutation comprennent un commutateur physique de signaux de clavier comportant une pluralité d'entrées de commutation physique reliées respectivement à la pluralité d'entrées de signaux de clavier, une sortie de signaux de clavier reliée à la sortie de signaux de commande et au moins une entrée de commande de liaison de la sortie de signaux de clavier avec une entrée de commutation physique parmi la pluralité d'entrées de commutation physique, et les moyens de commande comprennent un module de commande de commutation du commutateur physique, comportant une sortie de commande reliée à l'entrée de commande de liaison et une pluralité d'entrées de localisation reliées respectivement à la sortie de la pluralité de détecteurs d'utilisation de clavier, le module de commande de commutation produisant sur sa sortie de commande un signal de commande de liaison de la sortie de signaux de clavier avec l'entrée de commutation physique parmi la pluralité d'entrées de commutation physique, qui correspond au clavier associé au détecteur d'utilisation de clavier ayant produit sur sa sortie un signal d'utilisation de clavier.

Dans un mode de réalisation de l'invention, permettant d'identifier de manière univoque chacun des claviers utilisé, la pluralité d'entrées de localisation est reliée respectivement à la sortie de la pluralité de détecteurs d'utilisation de clavier par l'intermédiaire d'une pluralité d'indicateurs de clavier fournissant chacun sur leur entrée de localisation un signal caractéristique du clavier associé, lorsqu'ils reçoivent respectivement un signal d'utilisation de clavier du détecteur d'utilisation de clavier associé.

Par ailleurs, afin de pouvoir commuter également entre des claviers de types différents, par exemple du type « AZERTY » ou « QWERTY », selon l'ordre des touches de caractères dans les rangées de touches du clavier, il est prévu, dans un mode de réalisation de l'invention, un module de conversion, comportant:
- au moins des premier et deuxième organes de conversion, interposés sur au moins des première et deuxièmes voies correspondantes d'accès à la sortie de signaux de commande, pour la conversion des signaux présents sur l'entrée de signaux de clavier en signaux de commande envoyés sur la sortie de signaux de commande et adaptés à l'accès d'entrée de l'unité centrale, selon respectivement au moins des premier et deuxième types de conversion correspondant à au moins des premier et deuxième types de clavier,
- des moyens de commutation de type entre les première et deuxième voies, et
- des moyens de commande des moyens de commutation de type.

Dans un mode de réalisation de l'invention, permettant de sélectionner le type de conversion souhaité, les moyens de commutation de type comprennent une première entrée de contrôle de l'état de commutation de la première voie et une deuxième entrée de contrôle de l'état de commutation de la deuxième voie et les moyens de commande des moyens de commutation de type comportent un circuit logique, apte à produire des signaux de contrôle de l'état de commutation sur les première et deuxième entrées de contrôle, en fonction de l'état présent sur des première et deuxième entrées de sélection.

Un mode de réalisation de l'invention, simple à mettre en oeuvre, prévoit que le circuit logique des moyens de commande de type comporte une bascule du genre RS, dont les sorties sont reliées aux première et deuxième entrées de contrôle des moyens de commutation de type et dont les entrées de réglage S et de réinitialisation R forment les première et deuxième entrées de sélection.

Afin d'indiquer à un utilisateur le type du clavier commandant à un instant donné l'ordinateur, un mode de réalisation de l'invention prévoit des moyens d'indication à un utilisateur de l'état présent sur les première et deuxième entrées de contrôle.

Afin de permettre à un utilisateur de choisir par lui-même le type de conversion du clavier utilisé, un mode de réalisation de l'invention prévoit que l'état des première et deuxième entrées de sélection est contrôlé par des premier et deuxième interrupteurs actionnables manuellement.

Un mode de réalisation de l'invention, permettant de choisir automatiquement le type de conversion, en fonction du type de clavier utilisé, prévoit que les première et deuxième entrées de sélection sont reliées à des première et deuxième sorties de sélection de leur état d'un commutateur de type de clavier utilisé parmi les premier et deuxième types de clavier.

Dans un mode de réalisation de l'invention, le commutateur de type de clavier utilisé comprend une pluralité d'entrées de type de clavier, reliées respectivement à la sortie de la pluralité de détecteurs de l'utilisation du clavier associé et est apte à fournir les états sur les première et deuxième sorties de sélection, correspondant au type des signaux successifs reçus sur ses entrées de type de clavier.

Dans un mode de réalisation de l'invention, la pluralité d'entrées de type de clavier est reliée respectivement à la sortie de la pluralité de détecteurs d'utilisation de clavier par l'intermédiaire de la pluralité d'indicateurs de clavier comportant chacun une sortie d'indication de type reliée à l'entrée de type de clavier associée et fournissant chacun sur leur sortie d'indication de type un signal caractéristique du type du clavier associé, lorsqu'ils reçoivent respectivement un signal d'utilisation de clavier du détecteur d'utilisation de clavier associé.

Dans un mode de réalisation de l'invention, facile à mettre en oeuvre, au moins un indicateur type de clavier comporte un émetteur-récepteur de genre DTMF réagissant à l'émission d'un signal d'utilisation de clavier reçu du détecteur d'utilisation de clavier associé.

Un mode de réalisation de l'invention, permettant de détecter automatiquement l'utilisation d'un clavier, prévoit qu'au moins un détecteur d'utilisation de clavier est tel qu'il produit un signal de détection d'utilisation, lorsqu'il est appuyé sur l'une des touches du clavier.

Afin de détecter l'utilisation d'un clavier en présence d'une personne, il est prévu, suivant un mode de réalisation de l'invention, qu'au moins un détecteur d'utilisation de clavier comprend un détecteur de présence, provoquant la fourniture du signal de détection d'utilisation lorsqu'une personne se trouve à proximité dudit détecteur de présence.

Un mode de réalisation de l'invention prévoit qu'au moins un indicateur du type de clavier comprend des moyens pour inhiber sur sa sortie d'indication de type le signal d'indication du type du clavier, lorsque plusieurs signaux de détection d'utilisation sont reçus du détecteur associé pendant une durée prédéterminée.

Dans un mode de réalisation de l'invention, permettant une plus grande souplesse d'utilisation, les première et deuxième sorties de sélection du commutateur de type de clavier sont reliées aux première et deuxième entrées de sélection du circuit de conversion par une liaison radio.

Dans un mode de réalisation de l'invention, permettant une plus grande souplesse d'utilisation, la sortie de signaux de clavier est reliée à la sortie de signaux de commande par une liaison radio.

Dans un mode de réalisation de l'invention, qu'il comporte des moyens pour être alimenté en énergie par l'alimentation électrique de l'ordinateur.

Afin de pouvoir commuter entre aussi bien des signaux de synchronisation que des signaux de données provenant de claviers de types différents, un mode de réalisation de l'invention prévoit une sortie de signaux de commande pour un accès d'entrée de signaux de synchronisation de l'unité centrale et une sortie de signaux de commande pour un accès d'entrée de signaux de données de l'unité centrale.

L'invention sera mieux comprise à la lecture de la description qui va suivre, faite en référence aux dessins schématiques donnés uniquement à titre d'exemples non limitatifs et sur lesquels :
- la figure 1 représente une partie du dispositif de transmission selon l'invention ;
- la figure 2 représente une autre partie du dispositif de transmission selon l'invention ;
- la figure 3 représente un mode de réalisation par liaison radio du dispositif de transmission selon l'invention ;
- la figure 4 représente une alimentation en énergie du dispositif ;
- la figure 5 représente des branchements du dispositif de transmission selon l'invention.

Le dispositif de transmission suivant l'invention est destiné à être utilisé sur un ordinateur de tout type comportant une unité centrale 1, un clavier 2 et un moniteur 3. Le clavier 2 comporte des touches 4 générant des signaux électriques de commande de l'ordinateur, comprenant de manière connue des signaux de synchronisation et des signaux de données, sur une sortie 5 du clavier 2. Les signaux de commande générés par le clavier 2 sont destinés à commander l'unité centrale 1 comportant une unité de traitement de ces signaux ainsi qu'une unité d'envoi de signaux de moniteur au moniteur 3, ces unités n'étant pas représentées.

Il est prévu une entrée 6 de signaux de synchronisation d'un module ou circuit 7 de conversion, laquelle entrée 6 de signaux de synchronisation est reliée à une sortie de signaux de synchronisation d'un circuit 69 de commutation de claviers et de détection de type de clavier, qui sera décrit ci-dessous.

Dans le circuit 7 de conversion, l'entrée 6 de signaux de synchronisation est reliée à des première et deuxième entrées 8, 9 de premier et deuxième organes 10, 11 de conversion de signaux de synchronisation, reliés par leurs première et deuxième sorties respectives 12, 13 à une borne 14, 15 de premier et deuxième interrupteurs 16, 17 de signaux de synchronisation. L'autre borne 18 du premier interrupteur 16 et l'autre borne 19 du deuxième interrupteur 17 sont reliées l'une à l'autre ainsi qu'à une sortie 20 de signaux de synchronisation du circuit 7 de conversion, reliées à un accès 21 d'entrée de signaux de synchronisation de l'unité centrale 1.

De même, le circuit 7 de conversion comporte une entrée 22 de signaux de données, laquelle est reliée à une autre sortie de signaux de synchronisation du circuit 69 de commutation de claviers et de détection de type de clavier.

Dans le circuit 7 de conversion, l'entrée 22 de signaux de données est reliée à des première et deuxième entrées 23, 24 de premier et deuxième organes 25, 26 de conversion de signaux de données, dont les première et deuxième sorties 27, 28 sont reliées respectivement à une borne 29, 30 de premier et deuxième interrupteurs 31, 32 de signaux de données. L'autre borne 33 du premier interrupteur 31 de signaux de données et l'autre borne 34 du deuxième interrupteur 32 de signaux de données sont reliées entre elles ainsi qu'à une sortie 33 de signaux de données du circuit 7 de conversion. La sortie 33 de signaux de données est reliée à un accès 34 d'entrée de signaux de données de l'unité centrale 1.

Bien entendu, les interrupteurs 16, 17, 31, 32 peuvent également être prévus sur les entrées 8, 9, 23, 24 des organes de conversion 10, 11, 25, 26.

Le premier organe 10 de conversion de signaux de synchronisation et le premier organe 25 de conversion de signaux de données sont tels qu'ils réalisent une conversion des signaux présents sur leur entrée respective 8, 23 en signaux présents sur leurs sorties respectives 12, 27, selon un premier type de conversion, correspondant à un premier type de signaux de synchronisation et de signaux de données du clavier, dénommé ci-après premier type de clavier. Le deuxième organe 11 de conversion de signaux de synchronisation et le deuxième organe 26 de conversion de signaux de données sont tels qu'ils réalisent une conversion des signaux présents sur leurs entrées respectives 9, 24 en signaux présents sur leurs sorties respectives 13, 28, selon un deuxième type de conversion, correspondant à un deuxième type des signaux de synchronisation et des signaux de données du clavier, dénommé ci-après deuxième type de clavier. Les premier et deuxième types de clavier sont par exemple « AZERTY » et « QWERTY ». Bien entendu, tout autre type de clavier peut être prévu.

Les signaux de synchronisation et de données présents respectivement sur les sorties 12, 13 et 27, 28 des organes de conversion 10, 11 et 25, 26 sont adaptés aux accès d'entrée 21, 34 de l'unité centrale 1. Le premier organe 10 de conversion de signaux de synchronisation et le premier interrupteur 16 de signaux de synchronisation font partie d'une première voie 35 de signaux de synchronisation, tandis que le deuxième organe 11 de conversion de signaux de synchronisation et le deuxième interrupteur 17 de signaux de synchronisation font partie d'une deuxième voie 36 de signaux de synchronisation. Le premier organe 25 de conversion de signaux de données et le premier interrupteur 31 de signaux de données font partie d'une première voie 37 de signaux de données, tandis que le deuxième organe 26 de conversion de signaux de données et le deuxième interrupteur 32 de signaux de données font partie d'une deuxième voie 38 de signaux de données. Bien entendu, chaque voie, interrupteur et organe de conversion peut être prévu pour chaque accès d'entrée de l'unité centrale 1 en un nombre égal au nombre de types de claviers, supérieur ou égal à deux.

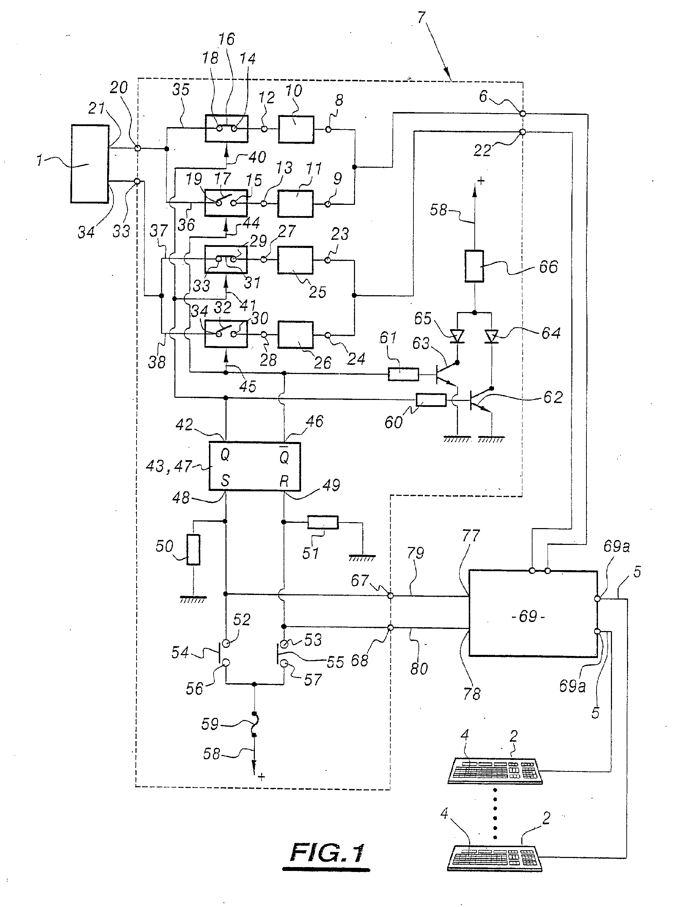

Les premiers interrupteurs 16, 31 comportent chacun une première entrée respective 40, 41 de contrôle d'état de commutation, reliées entre elles ainsi qu'à une première sortie 42 de contrôle d'un circuit logique 43 de commande. Les deuxième interrupteurs 17, 31 comportent chacun une entrée de contrôle respective 44, 45 de contrôle d'état de commutation, dénommée ci-après deuxième entrée de contrôle. Les deuxième entrées de contrôle 44, 45 sont reliées entre elles ainsi qu'à une deuxième sortie 46 de contrôle du circuit 43 de commande. Dans la réalisation représentée à la figure 1, le circuit 43 de commande est formé par une bascule 47 du genre RS. Bien entendu, le circuit 43 de commande peut être formé par tout autre moyen de commande à la portée de l'homme du métier. A la figure 1, la première sortie 42 de contrôle est reliée à la sortie Q d'état présent de la bascule 47, tandis que la deuxième sortie 46 de contrôle est reliée à la sortie Q d'état présent complémentaire de la bascule 47. L'entrée S de réglage de la bascule 47 forme une première entrée 48 de sélection, tandis que l'entrée R de réinitialisation de la bascule 47 forme une deuxième entrée 49 de sélection. Les première et deuxième entrées 48, 49 de sélection sont reliées à la masse par des résistances respectives 50, 51, ainsi qu'à une borne respective de premier et deuxième interrupteurs 52, 53 de sélection actionnables manuellement, par exemple formés chacun d'un bouton-poussoir, dont l'autre borne 56, 57 est reliée à une source continue 58 de tension par l'intermédiaire d'un fusible 59.

Par ailleurs, les première et deuxième sorties 42, 46 de contrôle sont reliées à un circuit électrique d'indication d'état à un utilisateur, comprenant à la figure 1 une résistance 60, 61 reliée par une extrémité respectivement aux première et deuxième sorties 42, 46 de contrôle et par leur autre extrémité à la base de premier et deuxième transistors 62, 63 bipolaires. La base des premier et deuxième transistors 62, 63 est reliée à la masse, tandis que leur émetteur respectif est relié à la cathode de première et deuxième diodes électroluminescentes 64, 65 reliées par leur anode à une première extrémité d'une résistance 66, elle-même reliée à son autre extrémité à la source 58 de tension. Les première et deuxième diodes 64, 65 émettent à l'état conducteur des première et deuxième lumières visibles de couleur différentes, par exemple rouge et verte respectivement.

On va maintenant décrire le fonctionnement du circuit 7 de conversion. Lorsque le. premier interrupteur 54 de sélection est fermé et le deuxième interrupteur 55 de sélection est ouvert, la première entrée 48 de sélection reçoit un signal 1 logique, correspondant à la tension de la source 58 et la deuxième entrée de sélection reçoit un 0 logique, correspondant à une tension de. 0 volt par rapport à la masse. La bascule 47 délivre alors sur la première sortie 42 de contrôle un signal de contrôle égal à un 1 logique, qui provoque et maintient la fermeture des premiers interrupteurs 16, 31, tandis que la deuxième sortie 46 de contrôle délivre un signal de contrôle égal à un 0 logique provoquant et maintenant l'ouverture des deuxièmes interrupteurs 17, 32. Dans ce cas, les accès 21, 34 d'entrée de l'unité centrale 1 reçoivent des signaux de synchronisation et des signaux de données, convertis par les premiers organes 10, 25 de conversion et correspondant à un premier clavier 2. Le premier transistor 62 passe à l'état conducteur, ainsi que la première diode 64 qui émet une première lumière visible, tandis que le deuxième transistor 63 et la deuxième diode 65 sont à l'état bloqué et que la deuxième diode 65 n'émet pas de lumière. S'il est appuyé sur le deuxième interrupteur 55 de sélection pour le fermer, le premier interrupteur 54 de sélection étant ouvert, il est appliqué sur la deuxième entrée 49 de sélection un signal de sélection égal à un 1 logique, tandis qu'il est appliqué sur la première entrée 48 de sélection un signal de sélection égal à un 0 logique. La première sortie 42 de contrôle délivre alors un signal de contrôle égale à un 0 logique, ce qui ouvre et maintient à l'état ouvert les premiers interrupteurs 16, 31, tandis que la deuxième sortie 46 de contrôle fournit un signal de contrôle égale à un 1 logique, ce qui ferme et maintient fermé les deuxièmes interrupteurs 17, 32. Les accès d'entrée 21, 34 de l'unité centrale. 1 reçoivent alors des signaux de synchronisation et des signaux de données, convertis par les deuxièmes organes 11, 26 de conversion et correspondant à un deuxième clavier 2. Le deuxième transistor 63 passe à l'état conducteur ainsi que la deuxième diode 65 qui émet alors la deuxième lumière visible, tandis que le premier transistor 62 et la première diode sont à l'état bloqué, la première diode 64 n'émettant pas la première lumière.

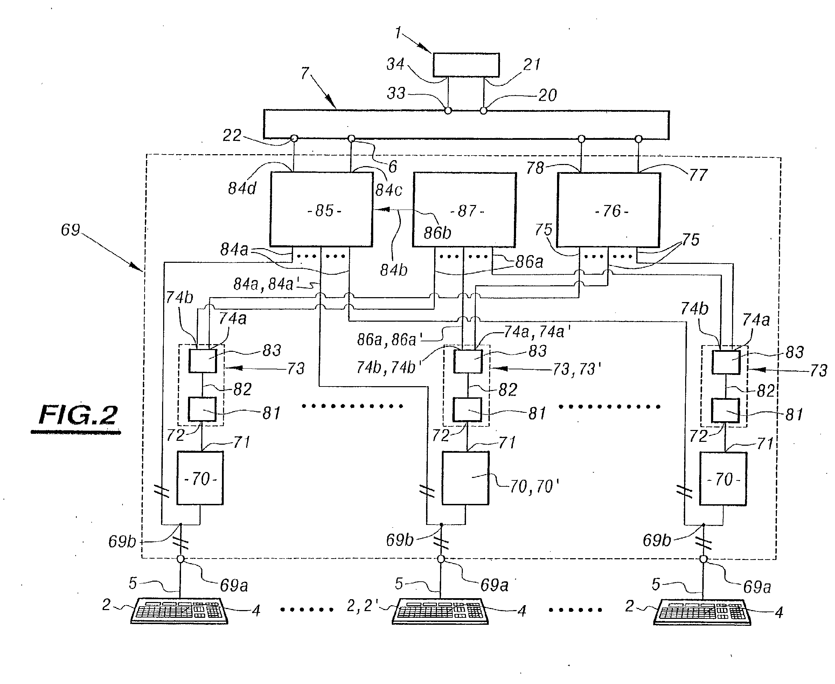

Le circuit 7 de conversion comporte également des première et deuxième entrées 67, 68 de sélection automatique connectées respectivement aux première et deuxième entrées 48, 49 de sélection. Les première et deuxième entrées 67, 68 de sélection automatique sont reliées à des première et deuxième sorties 77, 78 de sélection automatique d'état du circuit 69 de commutation de claviers et de détection de type de clavier utilisé, représenté à la figure 2. Le circuit 69 de commutation de claviers et de détection de type de clavier comprend une pluralité d'entrées 69a de signaux de clavier, reliées chacune à la sortie 5 d'un clavier 2, les entrées 69a de signaux de clavier étant prévues en un nombre correspondant au nombre de claviers 2, par exemple égal à quatorze. Les entrées 69a de signaux de clavier servent à transmettre les signaux de synchronisation et les signaux de données provenant de leur sortie 5 de clavier associée, ce qui est symbolisé à la figure 2 par un double trait. Les signaux de synchronisation et les signaux de données présents sur la sortie 5 d'un clavier sont dénommés ci-après signaux de clavier. Chaque entrée 69a de signaux de clavier est reliée à un noeud 69b de signaux de clavier. Chaque noeud 69b de signaux de clavier est relié d'une part à un détecteur 70 d'utilisation de clavier destiné à être chacun associé à un clavier 2 et d'autre part à une entrée de commutation physique d'un commutateur physique des signaux de clavier, qui sera décrit ci-dessous.

Chaque détecteur 70 d'utilisation de clavier est apte à générer sur sa sortie 71 un signal de détection d'utilisation du clavier 2 associé, lorsqu'il est effectivement détecté que le clavier est utilisé ou va être utilisé pour envoyer des signaux clavier à l'unité centrale 1. Le détecteur 70 est par exemple un détecteur d'appui d'une touche 4 quelconque ou d'une touche 4 déterminée du clavier 2 associé ou un détecteur de présence prévu sur ou dans le boîtier du clavier 2 et provoquant la fourniture du signal de détection d'utilisation sur sa sortie 71 lorsqu'une personne se trouve à proximité de ce détecteur de présence. La sortie 71 de l'indicateur 70 d'utilisation de clavier est reliée à une entrée 72 d'un indicateur 73 de clavier fournissant sur une sortie 74a d'indication de type un signal d'indication du type de son clavier 2 associé et fournissant sur une autre sortie 74b de localisation un signal de localisation du clavier 2 associé. Les indicateurs 73 de clavier 2 comprennent des moyens pour inhiber sur la sortie 74a d'indication de type le signal d'indication du type du clavier 2, lorsque plusieurs signaux de détection d'utilisation sont reçus du détecteur 70 associé pendant une durée prédéterminée. Les sorties 74a d'indication de type des indicateurs 73 de clavier, associées à la pluralité de claviers 2, sont reliées à une pluralité d'entrées 75 de type de clavier d'un commutateur 76 de type de clavier utilisé, fournissant des premier et deuxième signaux de sélection du type de clavier sur les première et deuxième sorties 77, 78 de sélection automatique d'état. Le commutateur 76 de type de clavier est du type premier entré-premier sorti, de telle sorte que le premier signal d'indication de type de clavier arrivé sur l'une des entrées 75 de type de clavier provoque sur les sorties 77, 78 du commutateur 76 de type de clavier des signaux de sélection correspondant au type indiqué par le signal d'indication présent sur cette entrée 75 de type de clavier, dans l'ordre chronologique. A la figure 2, les première et deuxième sorties 77, 78 de sélection automatique du commutateur 76 de type de clavier sont reliées directement par des premier et deuxième conducteurs électriques 79, 80 aux première et deuxième entrées 67, 68 de sélection automatique du circuit 7 de conversion.

Les indicateurs 73 de clavier comprennent chacun un émetteur 81 multifréquence à double tonalité de genre DTMF, relié en entrée à l'entrée 72 de l'indicateur 73 et relié sur sa sortie 82 à un récepteur multifréquence à double tonalité de genre DTMF correspondant, comportant les sorties 74a, 74b d'indication de type et de localisation de cet indicateur 73. Lorsque l'émetteur DTMF 81 reçoit sur son entrée 72 un signal de détection d'utilisation provenant du détecteur 70 auquel il est relié, cet émetteur 81 émet sur sa sortie 82 un signal ayant une fréquence caractéristique déterminée, ayant une relation de correspondance prédéterminée avec le clavier auquel est associé l'indicateur 73 de clavier. La pluralité d'émetteurs 81 DTMF associée à la pluralité de claviers 2 est apte à émettre sur les sorties 82 des signaux ayant des fréquences déterminées différentes les unes des autres. Lorsque le récepteur DTMF 83 reçoit de son émetteur DTMF associé 81 le signal de fréquence émis sur la sortie 82, le récepteur DTMF 83 fournit sur sa sortie 74a d'indication de type le signal d'indication correspondant au type du clavier 2 associé, différent en fonction du type du clavier 2 associé, et sur sa sortie 74b de localisation un signal de localisation correspondant au clavier 2 associé et différent en fonction du clavier 2 associé.

Chaque noeud 69b de signaux de clavier est relié, outre à au détecteur d'utilisation 71 associé, à une entrée 84a de commutation physique d'un commutateur 85 physique des signaux de clavier. Le commutateur 85 physique des signaux de clavier comporte une pluralité d'entrées 84a de commutation physique correspondant à la pluralité de claviers 2. Le commutateur 85 physique des signaux de clavier comporte une ou plusieurs entrées 84b de commande de commutation ou de liaison reliées à des sorties 86b correspondantes d'un module 87 de commande de commutation, lequel comporte en outre une pluralité d'entrées 86a de localisation de clavier, reliées respectivement aux sorties 74b de localisation de la pluralité d'indicateurs 73 de clavier et prévues en nombre correspondant. Le commutateur 85 physique des signaux de clavier comporte une sortie 84c de signaux de synchronisation reliée à l'entrée 6 de signaux de synchronisation du circuit 7 de conversion et une sortie 84d de signaux de données reliée à l'entrée 22 de signaux de données du circuit 7 de conversion. Les commutateurs 76 et 85 peuvent chacun être réalisés à l'aide de multiplexeurs ou autres.

Le module 87 de commande de commutation comporte une table logique de correspondance entre les signaux de localisation reçus sur ses entrées 86a de localisation et les signaux de commande de commutation produits sur ses sorties 86b de commande de commutation, de sorte à commander la transmission aux sorties 84c, 84d du commutateur 85, des signaux de clavier présents sur celle des entrées 84a de signaux de clavier qui correspond au clavier associé à l'entrée 86a de localisation sur laquelle sont présents des signaux de localisation. Ainsi, par exemple sur la figure 2, l'un quelconque 2' des claviers 2 est associé à l'entrée 84a' de signaux de clavier du commutateur 85, au détecteur d'utilisation 70', à l'indicateur 73' de clavier comportant une sortie 74a' d'indication de type reliée à l'entrée 75' de type de clavier du commutateur 76 de type de clavier et une sortie 74b' de localisation reliée à l'entrée 86a' de localisation du module 87 de commande de commutation. La présence du signal de localisation du clavier 2' sur la sortie 74b' de localisation provoque la commande de transmission par le module 87 de commande de commutation des signaux de clavier émis par le clavier 2' et présents sur l'entrée 84a' de signaux de clavier vers les sorties 84c, 84d de signaux de clavier.

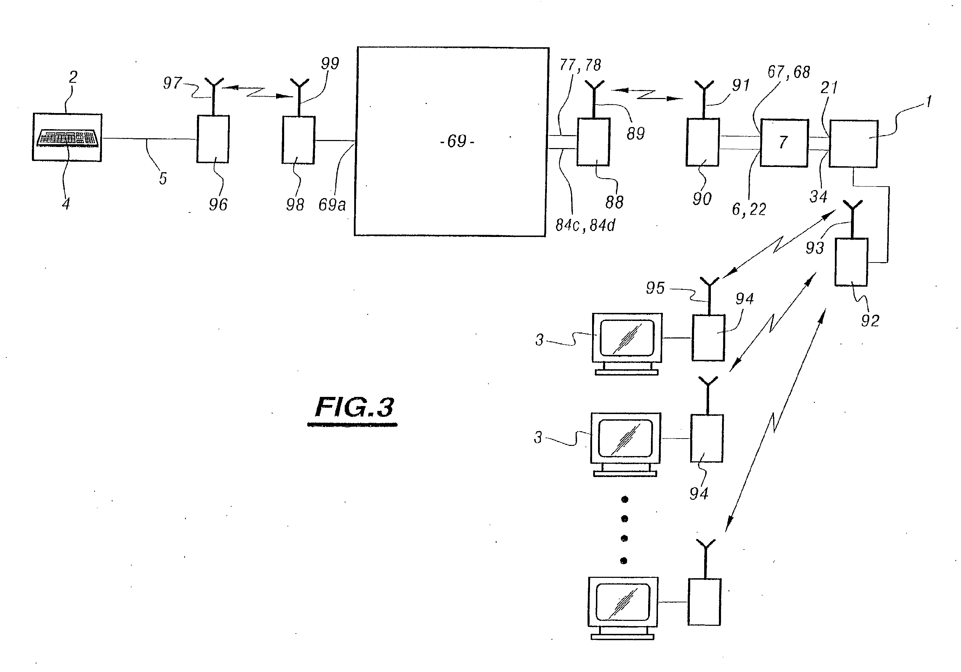

Dans la réalisation représentée à la figure 3, les première et deuxième sorties 77, 78 de sélection automatique, la sortie 84c de signaux de synchronisation et la sortie 84d de signaux de données sont reliées à un émetteur radio 88 muni d'une antenne radio 89 apte à émettre les signaux présents sur ces sorties 77, 78, 84c, 84d sous forme d'ondes radio vers un récepteur radio correspondant 90 muni d'une antenne 91, fournissant les signaux de sélection automatique reçus, les signaux de synchronisation reçus et les signaux de données reçus respectivement aux première et deuxième entrées de sélection automatique 67, 68, à l'entrée 6 de signaux de synchronisation et à l'entrée 22 de signaux de données du circuit 7 de conversion.

Par ailleurs, l'unité centrale 1 est reliée à un autre émetteur radio 92 muni d'une antenne 93 émettant les signaux d'image pour les moniteurs 3 par une liaison radio vers un récepteur 94 muni d'une antenne 95, qui est relié au moniteur 3. Le cas échéant, plusieurs récepteurs radio 94 et plusieurs moniteurs 3 reliés à ceci sont prévus pour recevoir les signaux d'image émis par l'émetteur.92 radio.

En outre, les claviers 2 fournissent leurs signaux de clavier sur leur sortie 5 à un émetteur radio 96 muni d'une antenne 97 qui émet les signaux de clavier par une liaison radio vers un récepteur radio 98 correspondant muni d'une antenne radio 99, fournissant les signaux de clavier reçus à l'entrer 69a de signaux de clavier du circuit 69 de commutation de claviers et de détection de type de clavier, associée au clavier 2.

Bien entendu, les liaisons radio et moyens d'émission-réception radio 88 à 99 peuvent être remplacés par tout support de transmission approprié, par exemple à fibre optique ou autre.

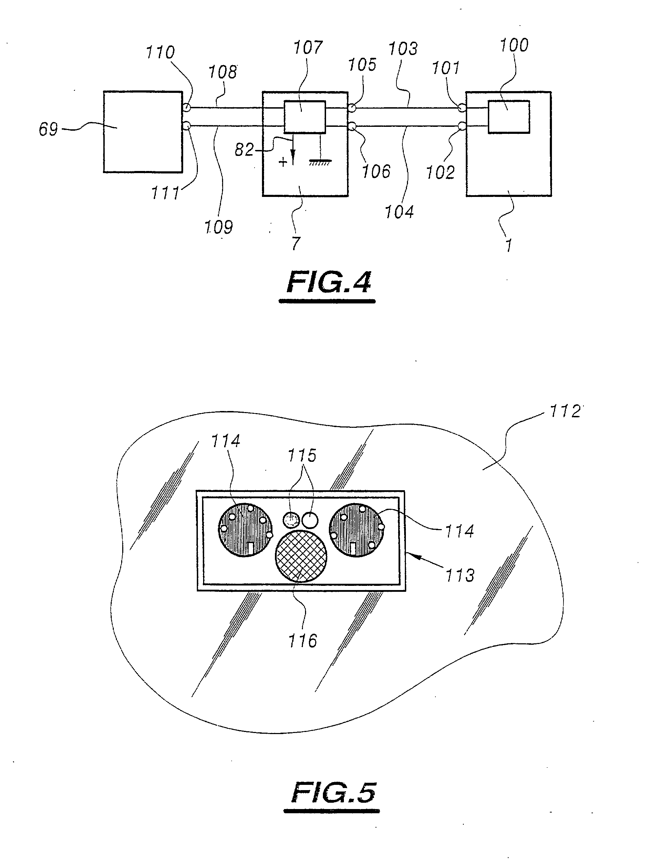

Dans le cas où les circuits prévus entre les claviers 2 et l'unité centrale 1 sont reliés entre eux par des conducteurs électriques, il est prévu une alimentation en énergie de ceux-ci, représentée à la figure 4.

A la figure 4, l'unité centrale 1 comporte une alimentation électrique 100 comportant deux bornes de sortie 101, 102 reliées par des conducteurs électriques 103, 104 à deux bornes d'entrée 105, 106 d'un bloc d'alimentation 107 fournissant la source de tension continue 82 du circuit 7 de conversion. Les bornes d'entrée 105, 106 sont également reliées au travers du bloc 107 d'alimentation à des conducteurs électriques 108, 109 reliés à des bornes d'entrée 110, 111 du circuit 69 de détection. L'alimentation 100 électrique de l'unité centrale 1 alimente en courant les bornes d'entrée 105,106 et 110,111. Le circuit 69 de commutation de claviers et de détection de type de clavier et le circuit 7 de conversion peuvent être réalisés chacun sur une carte à circuits imprimés ou autres, ou, le cas échéant, en un seul circuit, par exemple sur une même carte à circuits imprimés.

A la figure 5, le circuit 69 de commutation de claviers et de détection de type de clavier et le circuit 7 de conversion sont montés dans un boîtier 112 comportant sur sa partie arrière une plaque de branchement 113 comportant une pluralité de parties 114 de connecteur de type mâle ou femelle formant chacune une entrée 69a de signaux de clavier. Les parties 114 de connecteur sont destinées à être reliées à des parties de connecteur complémentaires connectées chacune à la sortie 5 d'un clavier 2. Deux parties 114 de connecteur de ce genre sont représentées à la figure 5, pour deux claviers 2. La plaque 112 de branchement comprend en outre deux trous ou fenêtres 115 permettant de voir les lumières émises par les diodes électroluminescentes 64, 65 respectivement. Un haut-parleur 116 peut également être prévu à la place ou en supplément des diodes électroluminescentes 64, 65, pour émettre un premier et un deuxième son différents selon que la première sortie de contrôle 42 ou la deuxième sortie de contrôle 46 est activée.

Si, dans le cas où un clavier 2 du premier type est utilisé pour émettre des signaux de synchronisation et des signaux de données du premier type, ce premier type est reconnu par le circuit 69 de commutation de claviers et de détection de type de clavier, qui active dans ce cas la première entrée de sélection automatique 67, ce qui provoque la connexion des accès d'entrée 21, 34 de l'unité centrale à la sortie 5 du clavier 2 par l'intermédiaire des premiers organes de conversion 10, 25. En outre, le clavier 2 est commuté physiquement par le circuit 69 de commutation de claviers et de détection de type de clavier sur les organes de conversion 10, 11, 25, 26.

Si, dans le cas où un clavier 2 du deuxième type est utilisé pour émettre des signaux de synchronisation et des signaux de données du deuxième type, ce deuxième type est reconnu par le circuit 69 de commutation de claviers et de détection de type de clavier, qui active dans ce cas la deuxième entrée de sélection automatique 68, ce qui provoque la connexion des accès d'entrée 21, 34 de l'unité centrale à la sortie 5 du clavier 2 par l'intermédiaire des deuxièmes organes de conversion 11, 26. En outre, le clavier 2 est commuté physiquement par le circuit 69 de commutation de ciaviers et de détection de type de clavier sur les organes de conversion 10, 11, 25, 26.

L'invention permet ainsi de commuter un ordinateur entre plusieurs claviers physiquement distincts pouvant être de types différents ou pouvant être du même type. Les utilisateurs d'ordinateur peuvent ainsi utiliser un même ordinateur avec plusieurs claviers, ce qui le rend plus convivial et plus adaptable. Le dispositif suivant l'invention peut ainsi être utilisé pour dispenser des cours avec visualisation d'images sur des moniteurs d'ordinateur pour des élèves, un professeur pouvant à volonté intervenir sur les écrans pour modifier, corriger ou montrer les images affichées sur les moniteurs.

## Revendications

1. Dispositif de transmission d'une pluralité de claviers (2) de commande d'un ordinateur à une unité centrale (1) de l'ordinateur de signaux électriques de commande à au moins un accès (21, 34) d'entrée de l'unité centrale (1) comportant :
- pour chaque clavier (2), au moins une entrée (69a) de signaux de clavier à laquelle sont appliqués des signaux électriques générés à partir du clavier (2),
- au moins une sortie (20, 33) de signaux de commande destinée à être reliée à l'accès (21, 34) d'entrée de l'unité centrale (1),
- des moyens (85) de commutation de la sortie (20, 33) de signaux de commande entre la pluralité d'entrées (69a) de signaux de claviers, et
- des moyens (70) de commande des moyens (85) de commutation.
**caractérisé en ce qu'**il comporte en outre un module (7) de conversion, comportant :
- au moins des premier et deuxième organes (10, 25 ; 11, 26) de conversion, interposés sur au moins des première et deuxièmes voies correspondantes (35, 37; 36, 38) d'accès à la sortie (20, 33) de signaux de commande, pour la conversion des signaux présents sur l'entrée (69a) de signaux de clavier en signaux de commande envoyés sur la sortie (20, 33) de signaux de commande et adaptés à l'accès d'entrée (21, 34) de l'unité centrale (1), selon respectivement au moins des premier et deuxième types de conversion correspondant à au moins des premier et deuxième types de clavier (2),
- des moyens (16, 17, 31, 32) de commutation de type entre les première et deuxième voies (35, 37 ; 36, 38), et
- des moyens (43) de commande des moyens (16, 17, 31, 32) de commutation de type.

2. Dispositif de transmission suivant la revendication 1, **caractérisé en ce que** les moyens (70) de commande comprennent, pour chaque entrée (69a) de signaux de clavier, au moins un détecteur (70) de l'utilisation du clavier (2), apte à produire sur sa sortie (71), lorsque des signaux de clavier sont présents sur l'entrée (69a) de signaux de clavier, un signal d'utilisation de clavier déclenchant la commutation des moyens de commutation sur cette entrée (69a) de signaux de clavier.

3. Dispositif de transmission suivant la revendication 2, **caractérisé en ce que** les moyens (85) de commutation comprennent un commutateur (85) physique de signaux de clavier comportant une pluralité d'entrées (84a) de commutation physique reliées respectivement à la pluralité d'entrées (69a) de signaux de clavier, une sortie (84c, 84d) de signaux de clavier reliée à la sortie (20, 33) de signaux de commande et au moins une entrée (84b) de commande de liaison de la sortie (84c, 84d) de signaux de clavier avec une entrée (84a) de commutation physique parmi la pluralité d'entrées (84a) de commutation physique, et les moyens (70) de commande comprennent un module (87) de commande de commutation du commutateur (85) physique, comportant une sortie (86b) de commande reliée à l'entrée (84b) de commande de liaison et une pluralité d'entrées (86a) de localisation reliées respectivement à la sortie (71) de la pluralité de détecteurs (70) d'utilisation de clavier, le module (87) de commande de commutation produisant sur sa sortie (86b) de commande un signal de commande de liaison de la sortie (84c, 84d) de signaux de clavier avec l'entrée (84a) de commutation physique parmi la pluralité d'entrées (84a) de commutation physique, qui correspond au clavier (2) associé au détecteur (70) d'utilisation de clavier ayant produit sur sa sortie (71) un signal d'utilisation de clavier.

4. Dispositif de transmission suivant la revendication 3, **caractérisé en ce que** la pluralité d'entrées (86a) de localisation est reliée respectivement à la sortie (71) de la pluralité de détecteurs (70) d'utilisation de clavier par l'intermédiaire d'une pluralité d'indicateurs (73) de clavier fournissant chacun sur leur entrée (86a) de localisation un signal caractéristique du clavier (2) associé, lorsqu'ils reçoivent respectivement un signal d'utilisation de clavier du détecteur (70) d'utilisation de clavier associé.

5. Dispositif de transmission suivant l'une quelconque des revendications précédentes, **caractérisé en ce que** les moyens (85) de commutation de la sortie (20, 33) de signaux de commande entre la pluralité d'entrées (69a) de signaux de claviers et les moyens (70) de commande de ceux-ci sont prévus dans un circuit (69) de commutation de claviers et de détection de type de claviers, comportant au moins une sortie (84c, 84d) de signaux de clavier reliée à la sortie (20, 33) de signaux de commande par l'intermédiaire des voies (35, 37 ; 36, 38) d'accès du module (7) de conversion.

6. Dispositif de transmission suivant l'une quelconque des revendications précédentes, **caractérisé en ce que** les moyens (16, 17, 31, 32) de commutation de type comprennent une première entrée (40, 41) de contrôle de l'état de commutation de la première voie (35, 37) et une deuxième entrée (44, 45) de contrôle de l'état de commutation de la deuxième voie (36, 38) et les moyens (43) de commande des moyens (16, 17, 31, 32) de commutation de type comportent un circuit logique (47), apte à produire des signaux de contrôle de l'état de commutation sur les première et deuxième entrées (40, 41; 44, 45) de contrôle, en fonction de l'état présent sur des première et deuxième entrées (48, 49) de sélection.

7. Dispositif de transmission suivant la revendication 6, **caractérisé en ce que** le circuit logique (43) des moyens de commande de type comporte une bascule (47) du genre RS, dont les sorties (42, 46) sont reliées aux première et deuxième entrées (40, 41; 44, 45) de contrôle des moyens (16, 17, 31, 32) de commutation de type et dont les entrées de réglage S et de réinitialisation R forment les première et deuxième entrées (48, 49) de sélection.

8. Dispositif de transmission suivant l'une quelconque des revendications 6 et 7, **caractérisé en ce qu'**il est prévu des moyens (64, 65, 116) d'indication à un utilisateur de l'état présent sur les première et deuxième entrées (40, 41; 44, 45) de contrôle.

9. Dispositif de transmission suivant l'une quelconque des revendications 6 à 8, **caractérisé en ce que** l'état des première et deuxième entrées (48, 49) de sélection est contrôlé par des premier et deuxième interrupteurs (54, 55) actionnables manuellement.

10. Dispositif de transmission suivant l'une quelconque des revendications 6 à 9, **caractérisé en ce que** les première et deuxième entrées (48, 49) de sélection sont reliées à des première et deuxième sorties (77, 78) de sélection de leur état d'un commutateur (76) de type de clavier utilisé parmi les premier et deuxième types de clavier (2).

11. Dispositif de transmission suivant la revendication 10 et l'une quelconque des revendications 2 à 4, **caractérisé en ce que** le commutateur (76) de type de clavier utilisé comprend une pluralité d'entrées (75) de type de clavier, reliées respectivement à la sortie (71) de la pluralité de détecteurs (70) de l'utilisation du clavier (2) associé et est apte à fournir les états sur les première et deuxième sorties (77, 78) de sélection, correspondant au type des signaux successifs reçus sur ses entrées (75) de type de clavier.

12. Dispositif de transmission suivant la revendication 11 et la revendication 4, **caractérisé en ce que** la pluralité d'entrées (75) de type de clavier est reliée respectivement à la sortie (71) de la pluralité de détecteurs (70) d'utilisation de clavier par l'intermédiaire de la pluralité d'indicateurs (73) de clavier comportant chacun une sortie (74a) d'indication de type reliée à l'entrée (75) de type de clavier associée et fournissant chacun sur leur sortie (74a) d'indication de type un signal caractéristique du type du clavier (2) associé, lorsqu'ils reçoivent respectivement un signal d'utilisation de clavier du détecteur (70) d'utilisation de clavier associé.

13. Dispositif de transmission suivant l'une quelconque des revendications précédentes, lorsqu'elles dépendent au moins de la revendication 4, **caractérisé en ce qu'**au moins un indicateur (73) du type de clavier (2) comporte un émetteur-récepteur (81, 83) de genre DTMF réagissant à l'émission d'un signal d'utilisation de clavier reçu du détecteur (70) d'utilisation de clavier associé.

14. Dispositif de transmission suivant l'une quelconque des revendications précédentes, lorsqu'elles dépendent au moins de la revendication 2, **caractérisé en ce qu'**au moins un détecteur (70) d'utilisation de clavier (2) est tel qu'il produit un signal de détection d'utilisation, lorsqu'il est appuyé sur l'une des touches (4) du clavier (2).

15. Dispositif de transmission suivant l'une quelconque des revendications précédentes, lorsqu'elles dépendent au moins de la revendication 2, **caractérisé en ce qu'**au moins un détecteur (70) d'utilisation de clavier (2) comprend un détecteur de présence, provoquant la fourniture du signal de détection d'utilisation lorsqu'une personne se trouve à proximité dudit détecteur de présence.

16. Dispositif de transmission suivant l'une quelconque des revendications précédentes, lorsqu'elles dépendent au moins de la revendication 4, **caractérisé en ce qu'**au moins un indicateur (73) du type de clavier (2) comprend des moyens pour inhiber sur sa sortie (74a) d'indication de type le signal d'indication du type du clavier (2), lorsque plusieurs signaux de détection d'utilisation sont reçus du détecteur (70) associé pendant une durée prédéterminée.

17. Dispositif de transmission suivant l'une quelconque des revendications précédentes, lorsqu'elles dépendent au moins de la revendication 10, **caractérisé en ce que** les première et deuxième sorties (77, 78) de sélection du commutateur (76) de type de clavier sont reliées aux première et deuxième entrées (67, 68) de sélection du circuit (7) de conversion par une liaison radio.

18. Dispositif de transmission suivant l'une quelconque des revendications précédentes, lorsqu'elles dépendent au moins de la revendication 3, **caractérisé en ce que** la sortie (84c, 84d) de signaux de clavier est reliée à la sortie (20, 33) de signaux de commande par une liaison radio.

19. Dispositif de transmission suivant l'une quelconque des revendications précédentes, **caractérisé en ce qu'**il comporte des moyens (101-111) pour être alimenté en énergie par l'alimentation électrique (100) de l'ordinateur.

20. Dispositif de transmission suivant l'une quelconque des revendications précédentes, **caractérisé en ce qu'**il comporte une sortie (20) de signaux de commande pour un accès (21) d'entrée de signaux de synchronisation de l'unité centrale (1) et une sortie (33) de signaux de commande pour un accès (34) d'entrée de signaux de données de l'unité centrale (1).
